# EUROPÄISCHE PATENTSCHRIFT

(11) **EP 1 484 515 B1**
(45) Veröffentlichungstag und Bekanntmachung des Hinweises auf die Patenterteilung: **05.10.2005**
(21) Anmeldenummer: 04076539.8
(22) Anmeldetag: 26.05.2004
(51) Int. Cl.: F16B 21/16, A45B 25/02, A45B 23/00

(54) **Methode zum Verbinden von Kunststoffteilen mit Stabelementen**
Method for coupling plastic parts with shaft elements
Méthode d'accouplement de pièces plastiques avec des barres

(30) Priorität: 05.06.2003 NL 1023600
(43) Veröffentlichungstag der Anmeldung: 08.12.2004
(73) Patentinhaber: Maxx Worldwide, 6301 CK Valkenburg a/d Geul (NL)
(72) Erfinder: Dautzenberg, Johannes H., 6371 HW Landgraaf (NL)

(56) Entgegenhaltungen:
- EP-A- 1 106 846
- FR-A- 1 449 203
- FR-A- 2 819 698
- US-A- 4 185 935
- US-A- 5 715 853

## Beschreibung

Die Erfindung betrifft das Verbinden von Kunststoffteilen mit Elementen im Stabform. Besonderes für Drehpunkte in Sonnenschirmen und solche. Bei Sonnenschirmen, welche in verschiedene Größen gefertigt werden können, werden gleiche Drehpunktelemente verwendet. Hierbei variiert nur die Länge der Stabelemente. Traditionnel gescheht das durch einen Stift, der durch ein gebohrtes Loch getrieben wird. Diese Arbeit ist schwierig zu automatisieren.
Die Erfindung macht Gebrauch von Kunststoff Unterteilen, die mit einem Stift vorhergesehen sind, der bei dem Spritzguß an das Unterteil zugebracht wird. Der Stift is von demselben Material wie der Kunststoff Unterteil und ist durch einen schmalen Rand festsitzend an demBoden des Lochs worein der Stift getrieben wird um die Verbindung zustande zu bringen. In das Stabelement ist an dieser Stelle eine Nut angebracht wodurch der Verbindungsstift getrieben wird.
Der Verbindungsstift soll verschiedene Durchschnitte haben, unter dem rund, viereckig oder einen an der Situation angepassten Durchschnitt.

Die Erfindung wird an Hand der Zeichnung erklärt.
Fig. 1 zeigt den Durchschnitt über einen Drehpunkt.
Fig. 2 zeigt den Durchschnitt über einen Drehpunkt an der Stelle des Verbindungsstiftes.
Fig. 3 zeigt das Stabelement mit Nut.
Fig. 4 zeigt den Querschnitt über das Stabelement an der Stelle der Nut.
Fig. 5 zeigt einen vergrößerben Durchschnitt über den Verbindungsstift.
Fig. 6 zeigt den Querschnitt über denVerbindungsstift.

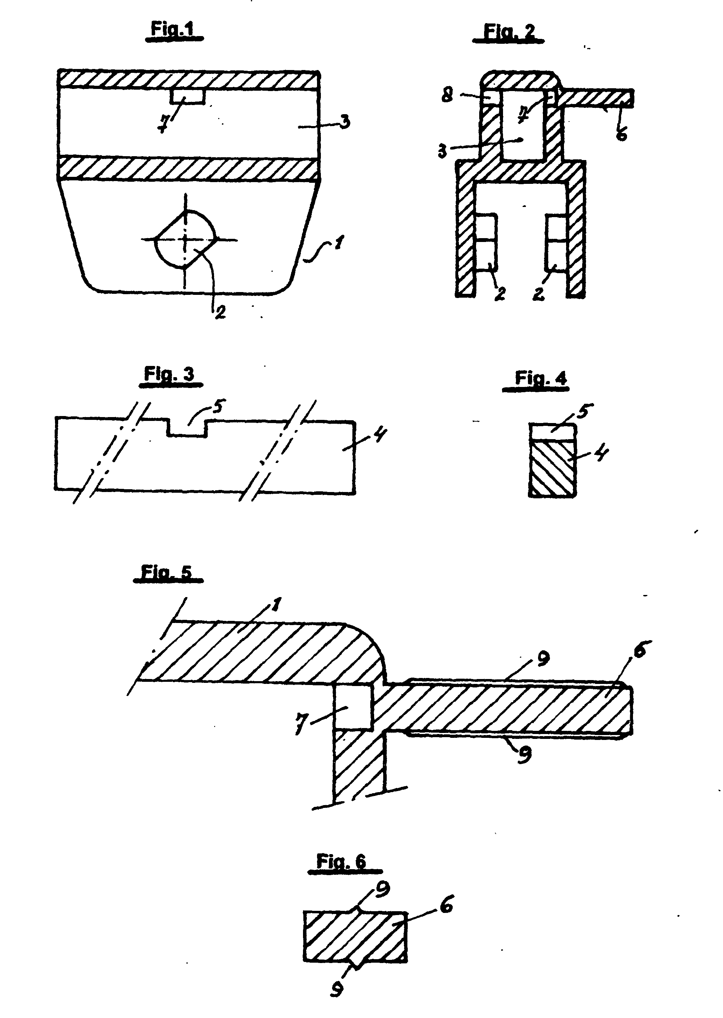

Eine Methode gemäß dem Oberbegriff des Anspruchs 1 ist aus EP-A-1 106 846 bekannt. In Fig. 1 ist mit (1) das Drehpunkt Element bezeichnet. Bei (2) sind die Nocken des Drehpunkts und (3) ist das Kanal worin Stabelement (4), das mit einer Nut(s) vorgesehen ist, befestigt wird. Am Drehpunkt Element (1) ist Verbindungsstift (6) angegossen, welcher in Öffnung (7) paßt, welche mit Öffnung (8) in Linie Liegt und wobei Öffnung (7) und Öffnung (8) denselben Durchmesser haben als Verbindungsstift (6). Verbindungsstift (6) ist eigentlich angegossen an dem Boden von Öffnung (7). Der Boden von Öffnung (7) ist derart dünn, daß der Verbindungsstift (6) mit einiger Kraft in Öffnung (7) und Öffnung (8) gepresst werden kann.

Verbindungsstift (6) kann mit Rilken (9) vorgesehen sein, welche verformt werden während das hinein pressen von Verbindungsstift (6) wodurch diese geborgt wird.
Als Stabelement (4) berücksicht werden Glas Faser Stab, Aluminium Stab, Messing Stab und diverse Arte Rohren
Der Durchschnitt von Verbindungsstift (6) ist Vorzugsweise Rechtwinklig , aber kann auch rund oder für die Situation beliebige Form haben. Auch können Verbindungsstifteht (6) in vielfalt benützt werden.
Die Erfindung ist selbstverständlich nicht auf Sonnenschirmkonstruktionen beschränkt.

## Patentansprüche

1. Methode zum Verbinden von einem Kunststoffteil mit einem Stabelement, wobei das Stabelement (4) mit einer Nut (5) vorgesehen ist wobei der zu verbindende Teil (1) mit einer Öffnung (7, 8) an Ort und Stelle der Nut (5) des Stabelementes (4) vorgesehen ist, **dadurch gekennzeichnet, daß** an dem Boden der Öffnung (7) ein Verbindungsstift (6) angebracht ist, welcher durch einen zerbrechlichen Rand mit dem Kunststoffteil verbunden ist, wobei der Verbindungsstift (6) in die Öffnung (7, 8) gepresst wird um die Verbindung zu realisieren.

2. Methode nach Anspruch 1, **dadurch gekennzeichnet, daß** der Verbindungsstift (6) rechtwinklig im Durchschnitt ist.

3. Methode nach Anspruch 1 und 2, **dadurch gekennzeichnet daß** der Verbindungsstift (6) rund im Durchschnitt ist.

4. Methode nach Anspruch 1, 2 und 3, **dadurch gekennzeichnet, daß** der Verbindungsstift (6) mit Längsrillen (9) vorgesehen ist.

## Claims

1. Method for the connection of a part of synthetic material with a bar unit , where the bar unit (4) is provided with a groove (5) where the connecting part (1) is provided with an opening (7, 8) at the position of the groove (5) of the bar unit (4) **characterised by** that at the bottom of opening (7) a connecting pin (6) is positoned which is connected with a rupturable edge of the connecting part (1), where the connecting pin (6) is pressed into opening (7, 8) to make the connection.

2. Method according to claim 1 **characterised by** that the connecting pin (6) has a square cross section.

3. Method according to claim 1and 2 **characterised by** that the connecting pin (6) has a circular cross section.

4. Method according to claim 1, 2and 3 **characterised by** that the connecting pin (6) is provided with lengthwise ridges.

## Revendications

1. Methode de connection d'une pièce de matériaux synthétique avec un élément en barres characterisé par que les éléments en barres (4) sont prévu d'une rainure (5) dans lequel le part à connecter (1) est prévu avec un orifice (7, 8) à la position du rainure (5) dans l'élément à connecter (4) dans lequel au fond du orifice (7) une tige de connection (6) est appliqué qui est connecté avec une bord rupturable du part de matériaux synthétique (1) dans lequel le tige de connection (6) est pressér dans le ouverture (7, 8) pour réaliser le connection.

2. Methode selon révendication 1 characterisé par que la tige de connection (6) est en section d'une rectangle.

3. Methode selon révendication 1 et 2 characterisé par que la tige de connection (6) est en section arrondi.

4. Methode selon révendication 1 et 2 characterisé par que la tige de connection (6) est prévu avec des nervures longitudinales.
